# FASCICULE DE BREVET EUROPEEN

(11) **EP 2 379 306 B1**
(45) Date de publication et mention de la délivrance du brevet: **14.08.2013**
(21) Numéro de dépôt: 09771551.0
(22) Date de dépôt: 09.12.2009
(51) Int. Cl.: B29C 57/04, A47J 31/44, A47J 31/46, B29K 27/18, B29K 77/00, B29L 23/00

(54) **PROCEDE DE FABRICATION D'UN ORGANE DE RACCORDEMENT HYDRAULIQUE, ET ORGANE DE RACCORDEMENT HYDRAULIQUE AINSI PRODUIT**
VERFAHREN ZUR HERSTELLUNG EINES HYDRAULISCHEN VERBINDUNGSGLIEDES, SOWIE DANACH HERGESTELLTES HYDRAULISCHES VERBINDUNGSGLIED
PROCESS FOR FABRICATING A HYDRAULIC CONNECTION MEMBER, AND HYDRAULIC CONNECTION MEMBER SO PRODUCED

(30) Priorité: 12.12.2008 FR 0858514
(43) Date de publication de la demande: 26.10.2011
(73) Titulaire: COMPAGNIE MEDITERRANEENNE DES CAFES, 06510 Carros (FR)
(72) Inventeur: BLANC, Jean-Pierre, F-06000 Nice (FR); GOERING, Alain, F-06000 Nice (FR)
(74) Mandataire: Decobert, Jean-Pascal
(86) Numéro de dépôt international: PCT/EP2009/066678
(87) Numéro de publication internationale: WO 2010/066764

(56) Documents cités:
- EP-A- 0 428 341
- FR-A- 2 180 975
- FR-A- 2 372 010
- JP-A- 55 007 415
- US-A- 3 960 472
- US-A- 4 113 813
- US-A1- 2003 155 694

## Description

La présente invention concerne un procédé de fabrication d'un organe de raccordement hydraulique ainsi qu'un organe de raccordement hydraulique.

Elle trouve son application particulièrement en électroménager pour des machines de préparation de boissons.

Les machines de préparation de boissons comportent communément un circuit d'eau chauffée ou non apte à réaliser une infusion ou une solubilisation d'une matière de préparation de boissons telle que la mouture de café, des feuilles de thé hachées ou encore du café en granulés solubles pour préparations instantanées.

Dans ce contexte, la présente invention permet de raccorder différents composants hydrauliques entre eux et en particulier à titre non limitatif une chaudière à d'autres éléments du circuit tel un groupe d'infusion.

Dans ce domaine, les contraintes de montage des éléments de circuit d'eau sont élevées notamment en termes de respect des conditions alimentaires et d'hygiène, de résistance à la température et à la pression.

Il est aussi nécessaire de prévoir un montage efficace des composants du circuit hydraulique.

A ce sujet, les systèmes existants ne donnent pas entière satisfaction. Le document EP-A1-0428341 révèle que le montage des différents éléments à raccorder est complexe. D'autres systèmes mettent en évidence l'utilisation de tubes dotés d'une portion annulaire participant au blocage mécanique des tuyaux sur l'organe hydraulique

Ce type de disposition implique cependant l'utilisation de tubes spécifiques de fabrication onéreuse et en grand nombre suivant des standards de dimension figés sans capacité de fabrication flexible voire ponctuelle.

Le document US-A-2003 0155694 divulgue un procédé de fabrication d'un tube ayant une zone élargie à son extrémité sur laquelle un rebord est formé en saillie.

Le document FR-A-2 372 010 divulgue un procédé de moulage pour produire une emboîture à l'extrémité d'un tube en matière plastique. Au moyen d'un outillage complexe associant un coulisseau et une bague divisée déployable radialement à l'axe du tube, on réalise une portion en bourrelet sur la surface extérieure du tube.

Une solution technique de même ordre est présentée dans US-A-4 113 813 avec une déformation d'un tube sous l'effet d'un effort appliqué radialement à l'axe du tube, par l'intérieur de ce dernier.

Il existe donc un besoin d'optimiser la facilité de la réalisation des éléments de raccordement pour systèmes hydrauliques. Ce besoin est d'autant plus important que la tendance actuelle est au recyclage et au remplacement des pièces usagées des machines ce qui implique des étapes de démontage et de remontage en nombre pour les professionnels de la maintenance.

L'invention s'inscrit dans ce cadre et propose à cet effet un procédé de fabrication d'un organe de raccordement hydraulique à la forme générale d'un tube permettant une fabrication facilitée de l'organe de raccordement.

Selon l'invention, un outillage léger et un procédé rapide et facile sont suffisants pour former l'organe de raccordement disposant d'une portion annulaire en relief sur sa surface extérieure. On peut alors envisager la fabrication dans les ateliers de maintenance, dans les usines de fabrication avec des étapes répétées, très rapides et sans difficulté. Un exemple avantageux est la possibilité de réparer un circuit hydraulique en remplaçant un organe de raccordement par simple découpe en longueur d'un tube et par sa mise en forme au moyen de l'invention.

Cette adaptabilité de l'invention s'inscrit particulièrement bien dans un contexte de recyclage des produits et d'éco-conception.

L'invention a notamment l'avantage de produire une mise en forme de l'extrémité du tube, comprenant notamment un évasement et la formation d'une partie annulaire, par un mouvement unique d'une machine ou d'un opérateur. Ce mouvement consiste en une introduction de l'extrémité du tube dans le dispositif comportant le moule, selon une direction de translation orientée suivant l'axe longitudinal du tube.

Grâce à l'invention, il n'y a pas de recours à des pièces complexes de déformation de la partie annulaire.

L'invention concerne également un organe de raccordement hydraulique présentant la forme générale d'un tube et disposant d'une portion annulaire en relief sur sa surface extérieure.

Suivant un aspect de l'invention, cet organe a l'avantage de comporter une portion annulaire en relief constituant un élément de blocage pour coopérer avec un élément de raccordement complémentaire et une portion évasée à son extrémité, l'ensemble facilitant la phase d'emmanchement de l'organe de raccordement dans la pièce à raccorder (telle une chaudière) et favorise aussi le placement d'un joint torique facilement mis en place par l'extrémité de l'organe de raccordement et calé au moyen de la portion annulaire et de la forme évasée.

D'autres buts et avantages apparaîtront au cours de la description qui suit qui présente un mode de réalisation préféré de l'invention cependant sans aucun caractère imitatif.

Avant cette description détaillée, il est rappelé que la présente invention concerne un procédé de fabrication d'un organe de raccordement hydraulique à la forme générale d'un tube comportant une portion annulaire en relief sur sa surface extérieure, dans lequel on réalise la portion annulaire par thermoformage d'un tube en matériau polymère, selon la revendication 1.

L'invention est telle que :
- le procédé présente les étapes consistant à introduire une extrémité du tube dans un moule de thermoformage comportant une matrice formée en négatif de la portion annulaire à réaliser, à chauffer l'extrémité du tube et à exercer une pression sur le tube en suivant la direction de l'introduction de sorte à déformer le tube dans la matrice.
- on utilise un moule présentant un moule avant et un moule arrière, le moule avant étant situé en amont du moule arrière suivant le sens d'introduction du tube, et on ouvre le moule avant du tube après sa déformation de sorte à autoriser le retrait du tube,
- on guide l'introduction du tube sur un organe mâle du moule,
- on utilise un organe mâle évasé vers sa base de sorte à évaser l'extrémité du tube.

Un dispositif de fabrication d'un organe de raccordement hydraulique comporte :
- un moule de thermoformage comprenant une matrice formée en négatif de la portion annulaire à réaliser, et des moyens de chauffage de l'extrémité du tube.

Suivant des possibilités avantageuses mais purement optionnelles, ce dispositif est tel que :
- le moule comporte une surface de butée configurée pour arrêter l'introduction du tube dans la matrice,
- le moule présente un moule avant étant situé en amont du moule arrière suivant le sens d'introduction du tube et le moule avant est mobile entre une position fermée et une position ouverte autorisant le retrait du tube,
- le dispositif comporte un organe mâle de guidage du tube,
- l'organe mâle est évasé vers sa base.

L'invention concerne également un organe de raccordement hydraulique pour machine de préparation de boissons selon la revendication 3.

Cet organe a la forme générale d'un tube et présente sur sa surface extérieure une portion annulaire apte à coopérer avec des moyens de connexion pour assurer le raccordement mécanique avec un élément hydraulique extérieur (tel une chaudière). L'organe comporte une portion évasée à son extrémité distale. Cette extrémité évasée s'étend sensiblement depuis la portion annulaire jusqu'à la bordure distale du tube.

Les dessins ci-joints représentent seulement un mode de réalisation de l'invention et permettront de la comprendre aisément.

Les figures 1 à 7 présentent différentes étapes successives du procédé de l'invention.

La figure 8 illustre un mode de réalisation de l'organe de raccordement selon l'invention.

Les figures 9 et 10 présentent une possibilité d'utilisation de l'organe de raccordement de l'invention dans un ensemble hydraulique du type chaudière.

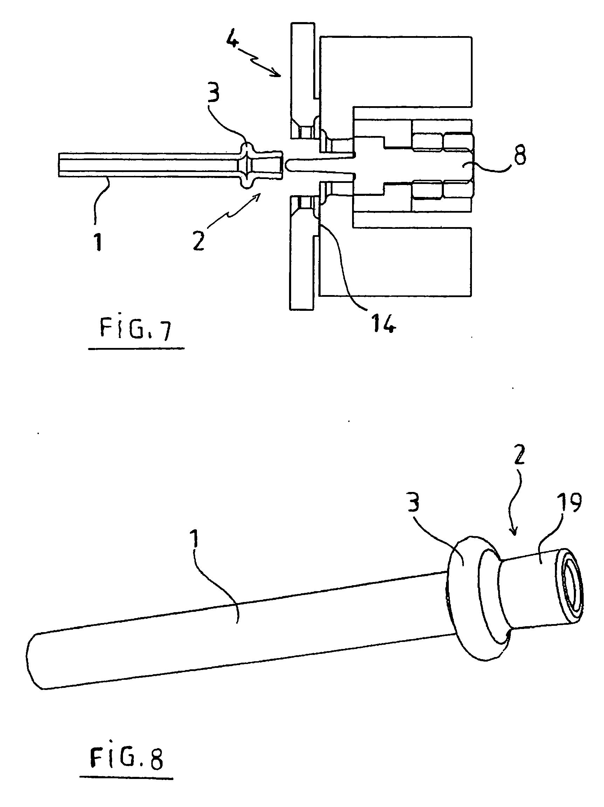

L'organe de raccordement tel que représenté à la figure 8 a la forme générale d'un tube 1 avantageusement en polytétrafluoréthylène (connu sous la marque déposée Téflon®) ou en polyamide. L'organe comporte une portion annulaire 3 ici visible sous forme d'un bourrelet réalisé de façon circulaire vers l'extrémité 2 du tube 1.

Dans le cas préféré illustré, la portion annulaire 3 a une même épaisseur que le reste du tube, en particulier que sa zone évasée. Cette solution évite les variations d'épaisseur susceptibles d'entraîner pertes de flexibilité et concentrations de contraintes.

Aux environs de la portion annulaire 3 vers la bordure du tube 1, l'organe de raccordement comporte une zone évasée 19. La zone évasée 19 a une partie s'étendant entre la portion annulaire 3 et la bordure du tube 1 et une partie en amont de la portion annulaire 3. Sur le plan de la connectique, une portion annulaire 3 et la zone évasée 19 coopèrent pour assurer la réception d'un joint torique sur la surface extérieure du tube 1.

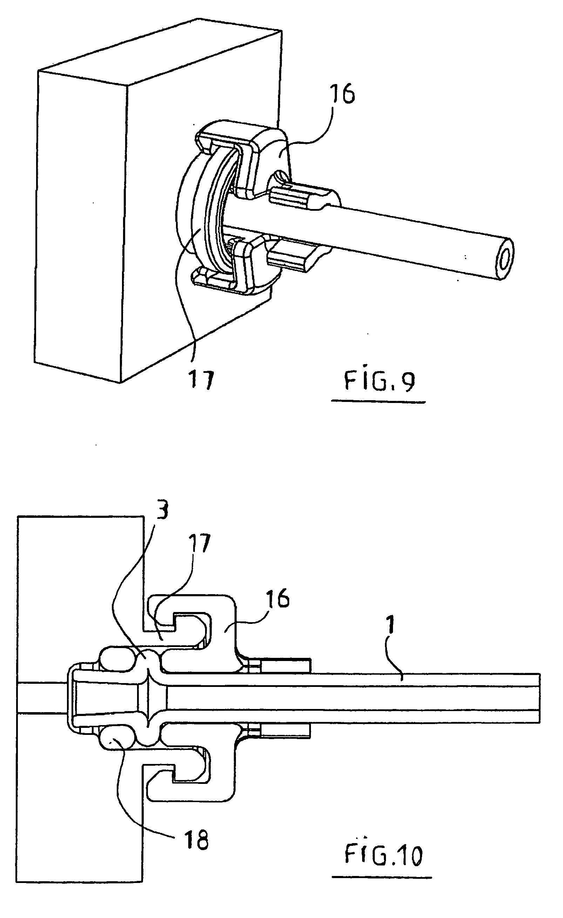

Une application de l'organe de raccordement hydraulique selon l'invention est donnée aux figures 9 et 10 auxquels les organes de raccordement coopèrent avec l'embouchure 17 d'un organe hydraulique (tel une chaudière) et un connecteur 16. Plus précisément, le tube 1 est inséré par son extrémité comportant la portion annulaire 3 à l'intérieur de l'embouchure 17 après avoir été équipé d'un joint 18 décrit précédemment. L'ensemble mis en butée dans l'embouchure 17 est ensuite arrêté en position par la mise en place du connecteur 16 ici sous forme d'une pièce en matière plastique moulée dotée d'une ouverture longitudinale permettant l'insertion aisée autour du tube 1. Le connecteur 16 comporte des moyens de blocage aptes à s'appliquer sur la portion annulaire 3 et sur l'embouchure 17 tel qu'illustré en figure 10 de sorte à réaliser la fixation. Cet exemple n'est aucunement limitatif et bien d'autres systèmes de connexion auraient pu être utilisés en combinaison avec l'organe de raccordement de l'invention.

Un autre aspect de l'invention concerne la réalisation de l'organe de raccordement à partir d'un élément tubulaire du type tube 1 préférentiellement en polyamide (Pa) ou en polytétrafluoroéthylène (PTFE), en polypropylène (PP) ou en polyethylène (Pe). Bien que ces polymères ne soient pas limitatifs des matériaux utilisables pour l'invention, on a constaté avec surprise qu'ils convenaient particulièrement à la mise en forme par thermoformage opérée par l'invention. Leur compatibilité alimentaire et leurs propriétés de résistance mécanique les rendent particulièrement adaptés à des applications aux appareils électroménagers tels des dispositifs de chauffage pour machines de préparation de boissons.

Le tube 1 est avantageusement de section circulaire sans limitation de diamètre même si on peut indiquer que des diamètres compris entre 3 et 20 millimètres donnent entière satisfaction. Toujours à titre non limitatif, l'épaisseur de la paroi du tube 1 peut être comprise entre 1 et 3 millimètres

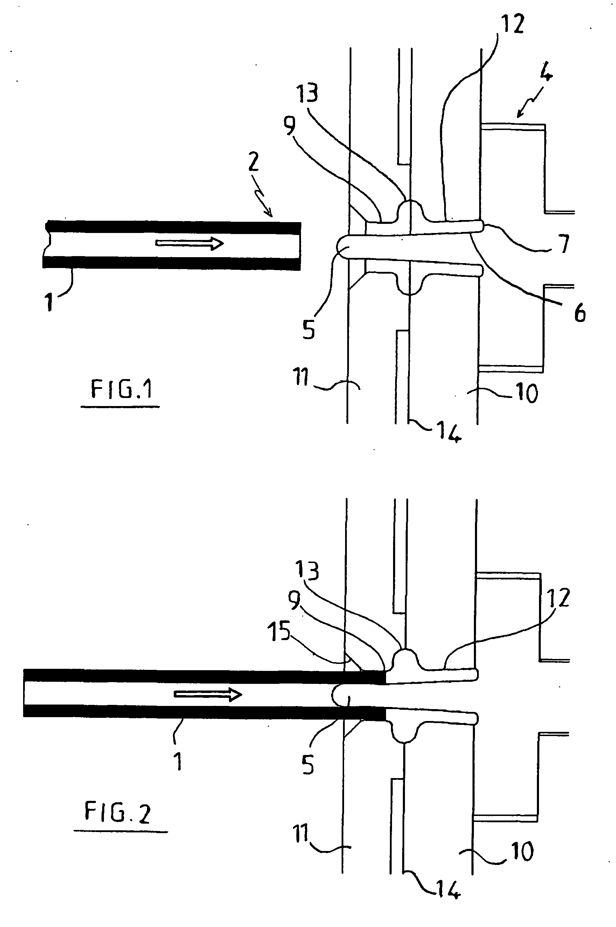

La mise en forme du tube 1 pour la réalisation de la configuration de son extrémité 2 s'effectue au moyen d'un dispositif de thermoformage 4 dont les éléments principaux apparaissent en figure 1 notamment. A cette figure, on a représenté un volume de réception de l'extrémité 2 du tube 1, délimité par une surface de moulage 9 formant un élément de matrice en négatif applicable sur la paroi extérieure du tube 1. Telle que représentée, la surface de moulage 9 comporte une matrice 13 réalisée sous forme d'un renfoncement dans la surface 9 au niveau duquel sera formé le bourrelet. A son extrémité intérieure, la surface 9 est prolongée par une surface de butée 7 de sorte à arrêter la translation du tube 1 lors de son insertion. Avantageusement, l'extrémité intérieure de la surface 9 se termine par une portion évasée 12 permettant de conférer une forme évasée à l'extrémité 2 du tube 1.

La surface de moulage 9 est constituée dans un moule ici réalisé en deux parties à savoir une partie avant 11 et une partie arrière 10 se succédant selon la direction d'insertion du tube 1 dans le dispositif de thermoformage 4.

Avantageusement, les moules avant 11 et arrière 10 se rejoignent sensiblement au milieu de la largeur de la matrice 13 apte à former la portion annulaire 3. Toujours à titre préféré, le moule avant 11 présente une mobilité soit manuelle soit par des moyens d'entraînement automatisés de sorte à l'ouvrir afin de faciliter l'extraction de l'organe de raccordement après sa mise en forme. Toujours à titre préféré, un chanfrein repéré à la figure 2 est formé à l'extrémité extérieure du moule avant 11 de sorte à faciliter l'introduction de l'extrémité 2 du tube 1.

Les éléments de moule sont chauffés par l'intermédiaire de moyens de chauffage courants notamment du type comportant une résistance électrique. Ils sont schématisés au repère 8 sous forme d'un corps chauffant en figure 7.

La surface du moulage 9 telle que représentée aux diverses figures constitue une surface femelle dans laquelle vient s'insérer le tube 1. En complément pour favoriser la déformation du tube 1 et son guidage dans le dispositif de thermoformage 4, ce dernier comporte avantageusement un organe mâle 5 illustré aux diverses figures sous forme d'un doigt allongé allant sensiblement jusqu'à l'extrémité extérieure du moule avant 11 ou légèrement au-delà. L'organe mâle 5 assure la réception de l'extrémité 2 du tube 1 dès le début de son insertion dans le dispositif de thermoformage 4. Il comporte avantageusement une première partie de diamètre et de forme sensiblement équivalentes au diamètre et à la forme intérieure du tube 1 pour mettre en oeuvre un contact surfacique de guidage performant. Suivant une deuxième partie de sa longueur en allant vers l'intérieur du dispositif de thermoformage 4, l'organe mâle 5 comporte avantageusement une portion évasée 6 laquelle, dans l'exemple du mode de réalisation illustré, commence sensiblement au niveau de la matrice 13.

La portion évasée 6 a un profil équivalent à l'évasement de la portion évasée 12 de la surface de moulage 9. Ces deux surfaces en vis-à-vis coopèrent pour déformer l'extrémité 2 du tube 1 de sorte à lui conférer une zone évasée 19.

L'amplitude de l'évasement de l'organe de raccordement et des portions 6 et 12 est par exemple comprise entre 2 et 15° relativement à l'axe du tube 1.

En partant de la figure 1, on a représenté une première phase de procédé durant laquelle le tube 1 est introduit suivant la direction indiquée par la flèche à l'intérieur du dispositif de thermoformage 4.

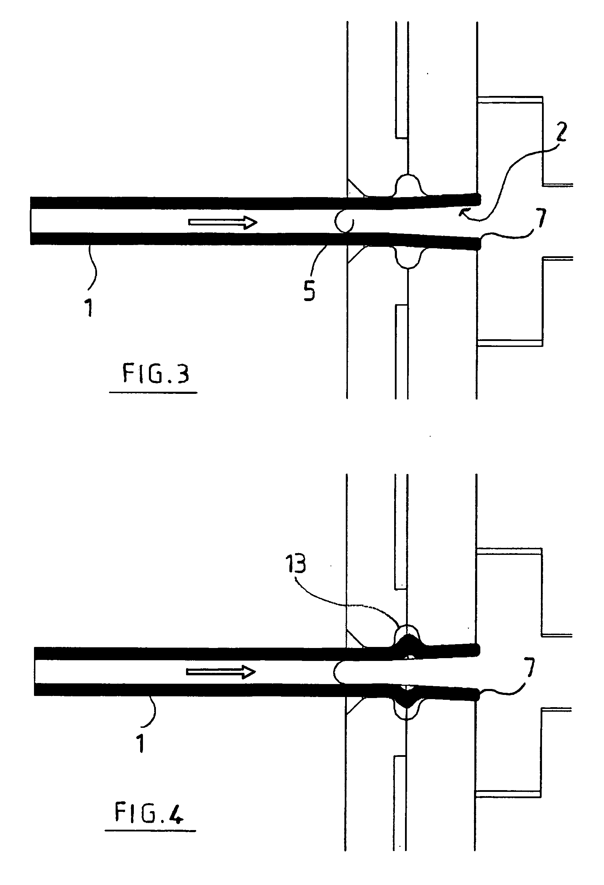

Le chanfrein et l'extrémité distale de l'organe mâle 5 assurent la prise en charge aisée de l'extrémité 2 du tube 1 pour amorcer l'insertion. Cette phase est représentée en figure 2. L'opérateur ou tout moyen automatisé poursuit l'avance du tube 1 de sorte à mettre son extrémité 2 en butée dans le fond du moule au niveau des surfaces de butée 7. Durant la phase d'insertion, un échauffement de l'extrémité 2 se produit de sorte qu'elle est rendue malléable et susceptible de se déformer en particulier pour former la zone évasée 19. De cette phase représentée à la figure 3 l'effort d'introduction exercée sur le tube 1 se poursuit tel que figuré en figure 2 de sorte à exercer une pression sur la matière du tube 1, laquelle dans sa partie rendue malléable par l'échauffement, va se déformer dans la matrice 13.

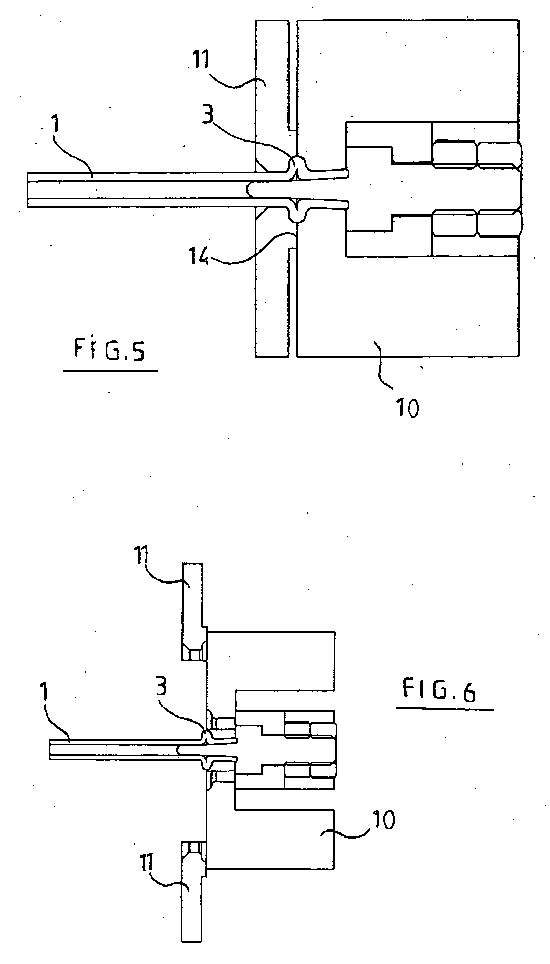

La figure 5 représente le résultat obtenu en fin de formation avec la réalisation d'une portion annulaire 3 sous forme d'un bourrelet réalisé par repliement de la matière de l'extrémité 2 du tube 1 sur elle-même au niveau de la matrice 13. Cette portion annulaire 3 se forme au moyen d'un seul mouvement de translation facile pour un utilisateur ou aisé à mécaniser. La portion annulaire 3 comporte par ailleurs un état de surface extérieure de bonne qualité et réalisée d'un seul tenant avec le reste de l'organe de raccordement si bien que les propriétés de résistance mécanique de l'ensemble sont favorisées.

L'extraction de l'organe de raccordement du dispositif de thermoformage 4 s'effectue dans le cas représenté à la figure 6 par la mobilité en ouverture du moule avant 11 ici sous forme de translation de deux parties composant le moule avant 11, la translation assurant leur éloignement.

On peut ensuite facilement retirer l'organe de raccordement comme cela apparaît en figure 7.

On notera que la formation d'une zone évasée 19 favorise l'efficacité de la déformation plastique de l'extrémité 2 du tube 1 lors de la réalisation de la portion annulaire 3. En effet, l'évasement constitue une première phase de mise en forme dont le demandeur a constaté qu'elle favorisait la malléabilité de la matière du tube pour la suite de l'opération de formage.

A titre d'illustration uniquement, pour un tube en PTFE, avec une température de refusion de 320°C et une vitesse d'avance du tube 1 de l'ordre de 1 mm/seconde, on réalise une portion annulaire 3 en moins de 15 secondes.

### REFERENCES

1. Tube
2. Extrémité
3. Portion annulaire
4. Dispositif de thermoformage
5. Organe mâle
6. Portion évasée
7. Surface de butée
8. Corps chauffant
9. Surface de moulage
10. Moule arrière
11. Moule avant
12. Portion évasée
13. Matrice
14. Plan de jonction
15. Chanfrein
16. Connecteur
17. Embouchure
18. Joint
19. Zone évasée

## Revendications

1. Procédé de fabrication d'un organe de raccordement hydraulique à la forme générale d'un tube (1) comportant une portion annulaire (3) en relief sur sa surface extérieure, dans lequel on réalise la portion annulaire (3) par thermoformage d'un tube (1) en matériau polymère avec une étape consistant à introduire une extrémité (2) du tube (1) dans un moule de thermoformage comportant une matrice (13) formée en négatif de la portion annulaire (3) à réaliser,
**caractérisé par le fait qu'**il comporte les étapes consistant à :
- chauffer l'extrémité (2) du tube (1),
- guider l'introduction du tube (1) sur un organe mâle (5) du moule, ledit organe mâle (5) ayant une portion évasée (6) vers sa base de sorte à produire sur le tube (1) une zone (19) s'évasant depuis la portion annulaire (3) jusqu'à la bordure distale de l'extrémité (2) du tube (1)
- exercer une pression sur le tube (1) en suivant la direction de l'introduction de sorte à déformer le tube (1) dans la matrice (13),
- équiper d'un joint torique (18) l'extrémité du tube (1) comportant la portion annulaire (3), le joint torique étant monté sur la surface extérieure du tube (1) de sorte que la portion annulaire (3) et la zone (19) s'évasant coopèrent pour assurer la réception du joint torique (18).

2. Procédé selon la revendication 1 dans lequel on utilise un moule présentant un moule avant (10) et un moule arrière (11), le moule avant (10) étant situé en amont du moule arrière (11) suivant le sens d'introduction du tube (1),
et dans lequel on ouvre le moule avant (10) du tube (1) après sa déformation de sorte à autoriser le retrait du tube (1).

3. Organe de raccordement hydraulique pour machine de préparation de boissons apte à être obtenu par le procédé selon l'une quelconque des revendications 1 à 2, ayant la forme générale d'un tube (1) comportant une portion annulaire (3) en relief sur sa surface extérieure, **caractérisé par le fait que** la portion annulaire (3) est située dans une zone évasée (19) s'évasant depuis la portion annulaire (3) jusqu'à la bordure distale de l'extrémité (2) du tube (1) et comportant un joint torique (18) reçu par la surface extérieure du tube (1) et en appui sur la zone évasée (19) et la portion annulaire (3).

4. Organe selon la revendication 3 dans lequel la portion annulaire (3) est située à la base de la zone évasée (19).

5. Organe selon l'une des revendications 3 à 4 dans lequel le tube (1) est en polytétrafluoroéthylène, en polypropylène, en polyethylène ou en polyamide.

6. Organe selon l'une quelconque des revendications 3 à 5 dans lequel l'amplitude de l'évasement est comprise entre 2° et 15° relativement à l'axe du tube (1).

## Patentansprüche

1. Verfahren zur Herstellung eines hydraulischen Verbindungsgliedes dessen Form annähernd einem Rohr (1) gleicht, mit einem auf seiner Außenseite reliefartigen ringförmigen Bereich (3), bei dem der ringförmige Bereich (3) durch Thermoformen eines Rohrs (1) aus einem Polymerwerkstoff realisiert wird, bei dem ein Herstellungsschritt darin besteht, ein Ende (2) des Rohrs (1) in ein Thermoform-Werkzeug bestehend aus einer Matrize (13), die als Negativabdruck des zu realisierenden ringförmigen Bereichs (3) ausgebildet ist, einzulegen ,
**gekennzeichnet dadurch, dass** es folgende Herstellungsschritte umfasst:
- Erwärmen des Endes (2) des Rohrs (1),
- Führen beim Einführen des Rohrs (1) und Aufstecken auf einen Dorn (5) des Werkzeugs, wobei der Dorn (5) an seiner Basis einen aufgeweiteten Bereich (6) besitzt, so dass am Rohr (1) von dem ringförmigen Bereich (3) an bis zum entfernt liegenden Rand des Endes (2) des Rohrs (1) eine aufgeweitete Zone (19) gebildet wird,
- Aufbringen eines Drucks auf das Rohr (1) in Richtung des Einführens, so dass das Rohr (1) im Werkzeug (13) verformt wird,
- Montage eines O-Rings (18) am Ende des einen ringförmigen Bereich (3) besitzenden Rohrs (1), wobei der O-Ring (18) auf der Außenseite des Rohrs (1) montiert ist, so dass der ringförmige Bereich (3) und die sich aufweitende Zone (19) derart zusammenwirken, das die Aufnahme des O-Rings (18) sichergestellt ist.

2. Verfahren gemäß Patentanspruch 1, bei dem ein Werkzeug bestehend aus einem vorderseitigen Werkzeugteil (10) und einem rückseitigen Werkzeugteil (11) verwendet wird, wobei das vorderseitige Werkzeugteil (10) in Einführungsrichtung des Rohrs (1) gesehen, vor dem rückseitigen Werkzeugteil (11) gelegen ist und bei dem man das vorderseitige Werkzeugteil (10) des Rohrs (1) nach seiner Verformung öffnet, um das Rohr (1) entnehmen zu können.

3. Hydraulisches Verbindungsglied für eine Getränkezubereitungsmaschine, das mit dem Verfahren gemäß einem der vorstehenden Patentansprüche 1 bis 2 hergestellt werden kann und dessen Form annähernd einem Rohr (1) gleicht, mit einem ringförmigen Bereich (3), der ein Relief auf dessen Außenseite bildet, **gekennzeichnet dadurch, dass** der ringförmige Bereich (3) in einer aufgeweiteten Zone (19) liegt, die sich von dem ringförmigen Bereich (3) bis zum Rand des entfernten Endes (2) des Rohrs (1) aufweitet und die einen O-Ring (18) besitzt, der auf der Außenseite des Rohrs (1) montiert wird und an der aufgeweiteten Zone (19) und dem ringförmigen Bereich (3) anliegt.

4. Verbindungsglied gemäß Patentanspruch 3, bei dem sich der ringförmige Bereich (3) an der Basis des aufgeweiteten Bereichs (19) befindet.

5. Verbindungsglied gemäß einem der Patentansprüche 3 bis 4, bei dem das Rohr (1) aus Polytetrafluorethylen, Polypropylen, Polyethylen oder Polyamid besteht.

6. Verbindungsglied gemäß einem der Patentansprüche 3 bis 5, bei dem die Aufweitung zwischen 2° und 15° bezogen auf die Achse des Rohrs (1) beträgt.

## Claims

1. A method for fabricating a hydraulic convection member with the general shape of a tube (1) comprising an annular portion (3) protruding on its outer surface, wherein the annular portion (3) is produced by thermoforming a tube (1) of polymeric material with a step consisting of inserting one end (2) of the tube (1) in a thermoforming mold comprising a die (13) formed as a negative of the annular portion (3) to be produced, **characterized in that** it comprises the following steps:
- heating the end (2) of the tube (1),
- guiding the introduction of the tube (1) onto a male member (5) of the mold, the said male member (5) having a flared portion (6) towards its base so as to produce on the tube (1) a zone (19) flaring from the annular portion (3) to the distal edge of the end (2) of the tube (1),
- exerting a pressure on the tube (1) in the direction of introduction so as to deform the tube (1) in the die (13),
- fitting an o-ring (18), the end of the tube (1) comprising the annular portion (3), the o-ring (18) being fitted on the outer surface of the tube (1) such that the annular portion (3) and the flaring zone (19) cooperate to ensure reception of the o-ring (18).

2. A method according to claim 1 wherein a mold having a front mold (10) and a rear mold (11), the front mold (10) being situated upstream of the rear mold (11) in the direction of introduction of tube (1),
and in which the front mold (10) of the tube (1) is opened after its deformation so as to allow withdrawal of the tube (1).

3. Hydraulic connection member for use on a beverage préparation machine capable of being obtained by the process according to any one of claims 1 to 2, having the general shape of a tube (1) with an annular portion (3) protruding on its outer surface, **characterized in that** the annular portion (3) lies within a flared region (19), flaring taking place from the annular portion (3) up to the distal edge of the end (2) of the tube (1 ) and having an o-ring (18) received by the outer surface of the tube (1) and bearing on the flared region (19) and on the annular portion (3).

4. Member according to claim 3 wherein the annular portion (3) is located at the base of the flared zone (19).

5. Member according to one of claims 3 to 4 wherein the tube (1) is made of polytetrafluoroethylene, polypropylene, polyethylene or polyamide.

6. Member according to any one of claims 3 to 5 wherein the magnitude of the flaring is between 2° and 15° relative to the axis of the tube (1).
